(19) Europäisches Patentamt

European Patent Office

Office européen des brevets

(11) EP 1 080 035 B1

(12) EUROPEAN PATENT SPECIFICATION

(45) Date of publication and mention
of the grant of the patent:
**28.11.2001 Bulletin 2001/48**

(51) Int Cl.$^7$: **C01B 13/22**

(86) International application number:
**PCT/US99/11551**

(21) Application number: **99924501.2**

(22) Date of filing: **26.05.1999**

(87) International publication number:
**WO 99/61370 (02.12.1999 Gazette 1999/48)**

(54) **PARTICLE SIZE CONTROL IN PYROHYDROLYSIS OF METAL CHLORIDES**

STEUERUNG DER TEILCHENGRÖSSE IN DER PYROHYDROLYSE VON METALLCHLORIDEN

REGULATION DE LA DIMENSION PARTICULAIRE DANS LA PYROHYDROLYSE DE CHLORURES METALLIQUES

(84) Designated Contracting States:
**DE FR GB NL**

(30) Priority: **27.05.1998 US 85650**

(43) Date of publication of application:
**07.03.2001 Bulletin 2001/10**

(73) Proprietor: **E.I. DUPONT DE NEMOURS AND COMPANY**
**Wilmington, Delaware 19898 (US)**

(72) Inventors:
• **EASTHAM, Donald, Hubert**
**Victoria, TX 77905 (US)**
• **WHITING, Gary, ken**
**Northeast, MD 21901 (US)**
• **LYKE, Stephen, Erwin**
**Wilmington, DE 19808 (US)**

(74) Representative: **Matthews, Derek Peter et al**
**Frank B. Dehn & Co.,**
**European Patent Attorneys,**
**179 Queen Victoria Street**
**London EC4V 4EL (GB)**

(56) References cited:
GB-A- 866 363      GB-A- 971 747
GB-A- 991 318      GB-A- 1 056 293

**Description**

## BACKGROUND OF THE INVENTION

### FIELD OF THE INVENTION

The present invention relates to an improved process for the production of metal oxides from metal chlorides by fluid bed pyrohydrolysis. In particular, the present invention provides a method to control particle size in the fluid bed.

### Description of the Related Art

Fluid bed pyrohydrolysis is a known technique practiced commercially, for example, for regeneration of HCl in pickle liquors arising from cleaning of hot-rolled steel. In this process, metal chlorides are thermally decomposed in the presence of water to form metal oxides and hydrogen chloride. The metal oxides predominantly deposit on the particles of the fluid bed. Pyrohydrolysis has advantages over other techniques such as spray roasting in that it produces a granular, abrasion-resistant, dust-free metal oxide with low residual chloride content.

It is well known that one of the most important problems in fluid bed pyrohydrolysis is particle size control. Coarsening of the bed material due to continuous metal oxide deposition requires active particle size control to avoid, for example, the need to shut down the process to replace the contents of the bed. Coarsening of the bed may lead to dust formation which can cause downstream problems such as plugging of absorbers and scrubbers and potential environmental problems if the dust escapes to the atmosphere. When the metal oxide is iron oxide, the dust is known as "red dust". Red dust is comprised of fine particulate iron oxide.

It is desirable to have a method to control particle size with minimum effort of monitoring and maximizing operation time of the reactor, limiting need to shut down to replace the contents of the bed. Improvements in particle size control will positively impact metal oxide product quality, fluidization of the bed, combustion of fuel, metal oxide deposition behavior, and energy efficiency of the process.

Previously studied methods for controlling particle size in fluid bed reactors include: operation of the bed under reducing conditions; use of a feed lance position above the bed; use of expanded freeboards. It is also known to add fine seed particles.

One particular method of particle size control is to collect the product from the bed, screen the product for fines and return this material to the bed. If a screening step is omitted, a crushing step may be needed. However, this method tends to involve high maintenance, needing considerable attention by operators. Further, this method is a temporary solution and can lead to frequent shutdown and/or intermittent operation due to coarsening of the bed.

Cyclones have been used to collect finely divided metal oxides (dust), known as "cyclone fines", which have been blown out of the reactor. This material, cyclone fines, can be recycled to the reactor. This recycle improves conditions but does not achieve total control of particle size of the bed.

While it is known to add seed materials in pyrohydrolysis of metal chlorides, heretofore trial and error has been the basis for control of the addition of seed material. Unfortunately these methods have not fully succeeded in control of particle size. Eventually, the particles in the bed become too large, there is insufficient surface area for newly formed metal oxide particles to deposit, dust is generated, and the bed contents need to be dumped, causing loss of production, increase in fuel usage, and increase in manpower demands.

There remains a need therefore, in pyrohydrolysis, for a method to control particle size which overcomes the disadvantages of those methods presently known in the art. This invention meets this need.

## SUMMARY OF THE INVENTION

The present invention provides in a process for pyrohydrolysis of metal chlorides in a fluid bed reactor comprising particulate bed material, to form hydrogen chloride (HCl), metal oxides which deposit on the bed material, and fine particulate metal oxides which are exhausted from the reactor, wherein the fine particulate metal oxides are collected and recycled to the reactor, the improvement comprising the steps of:

(a) selecting a target specific population of the bed material, wherein the target specific population is within the range of $7.60 \times 10^7$ to $1.77 \times 10^6$ particles per kilogram;
(b) selecting a metal chloride addition rate to the reactor;
(c) determining rate at which the metal oxides deposit on the bed material, based on the metal chloride addition rate; and
(d) adding a seed material to the bed wherein the seed material has a specific population of not less than $1.40 \times 10^7$ particles per kilogram, and wherein the seed addition rate is defined by

$$SR = DR \times \frac{BSP}{(SSP - BSP)}$$

wherein SR = seed addition rate, DR = metal oxide deposition rate, BSP = specific population of the greater than 50 micron bed material, and SSP = specific population of the greater than 50 micron seed material, whereby the specific population of the bed is controlled within the range of about $7.60 \times 10^7$ to about $1.77 \times 10^6$ particles per kilogram.

The process of this invention provides means to control particle size in a fluid bed in the pyrohydrolysis of metal chlorides. This method allows for either increasing or decreasing the particle size of the bed so as to maintain the specific population, and therefore, the average (or mean) particle size of the bed within a predetermined range or at a predetermined value. Preferably, the specific population is $7.60 \times 10^7$ to $1.77 \times 10^6$ particles per kilogram which corresponds to an average mean size of the particles of the bed material of about 200 to 600 microns. This invention also provides means to correct the particle size of the bed material in the event the bed has been over or under-seeded.

The seed material is comprised of solids which are typically inert under process conditions. The particle size of the seed material may range from less than 25 microns up to about 400 microns, with the majority of particles in the range of 45 to 180 microns. Preferably the seed material has an average particle size of 50 to 180 microns. The seed size corresponds to a specific population of not less than $1.40 \times 10^7$ particles per kilogram, preferably, to specific populations of $1.52 \times 10^9$ to $6.62 \times 10^7$, if the mass fraction of seed is distributed normally around the mean and the standard deviation of the seed is 5 microns. The seed material may comprise small particles (less than about 50 microns in size) which, while they are unlikely to function as seed, may become incorporated into the layers of metal oxide as the layers form on the seed and/or growing particle.

In one particular embodiment of the present invention, the source of metal chlorides is an aqueous metal chloride solution such as is produced by hydrochloric acid pickling of metals. A particular example is hydrochloric acid pickling of steel to remove oxides from the surface in order to make further treatment such as galvanizing possible. Such solutions, conventionally known as pickle liquor, typically comprise 10-26% iron chloride, mainly as ferrous chloride, with some ferric chloride and 0.5-10% HCl.

In an alternative embodiment, the metal chlorides are byproducts from the chloride process for making pigmentary $TiO_2$. In this process, titanium bearing material or ore is chlorinated to produce $TiCl_4$ and other metal chloride byproducts. Subsequently, the $TiCl_1$ is separated from the byproducts and is oxidized to pigmentary $TiO_2$. The metal chloride byproducts are highly acidic, typically having a pH of 0 or less and often contain iron chlorides as the major metal chloride present. Advantageously, when the metal chlorides are byproducts from a $TiO_2$ process, the metal chlorides will contain particulate coke. The particulate coke reacts under pyrohydrolysis process conditions which reduces the amount of fuel required to operate at the desired reaction temperatures.

It has been surprisingly found that particle size control in a fluid bed for metal chloride pyrohydrolysis can be achieved by combining recycle of cyclone fines and addition of a seed material comprising inert solids, wherein the addition rate of the seed material is based on the particle size distribution of the bed material, the metal oxide deposition rate based on the metal chloride addition rate, and the particle size distribution of the seed material. This provides the following advantages over present practice:

(1) Prevention of the dust phase which fouls downstream equipment causing shutdowns for equipment clean-out and production losses.

(2) Prevention of shutdown to dump and recharge the bed resulting in production losses and which reduces the life of the reactor, particularly, refractory material in the reactor.

(3) Reduces potential for out of specification metal oxide product particles which may occur when the bed particles become too large or too small.

(4) Reduces potential for off-quality product HCl due to dust carryover into the HCl product.

(5) Reduces potential for particulate emissions if downstream scrubbers are overwhelmed or fail due to the presence of dust.

(6) Reduces potential for extremely high blowover rates which may occur when the average bed particle size gets too small or too much seed is added.

(7) Reduces potential for cyclone downleg pluggage which may occur when blowover rates are too high.

The iron oxide produced in the process of this invention has many uses, for example:

(1) Raw material for ferrite production.

(2) Coloring agent in paint and cement industries.

(3) Weighing agent for production of heavy concrete.

(4) Reagent in the manufacture of refractories.

(5) Raw material for the iron industry.

## BRIEF DESCRIPTION OF THE FIGURE

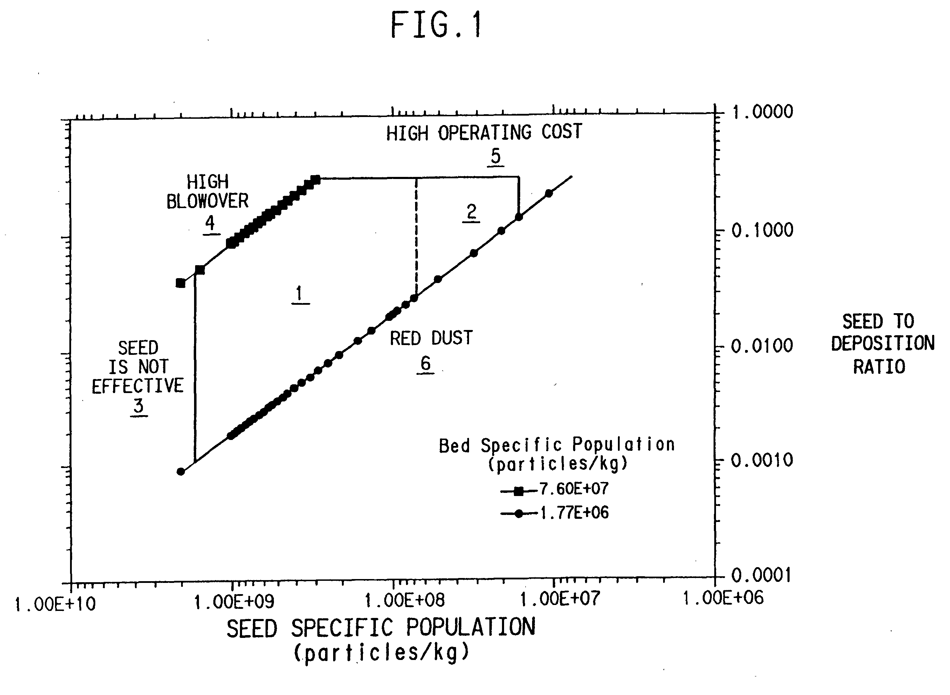

Figure 1 is a graph depicting the relationship between the ratio of the addition rate of seed material to the rate of deposition of metal oxide and the particle size distribution of the seed material in particles per kilogram. The area within the boundaries defines the operating area to control particle size in a process for pyrohydrolysis of metal chlorides in a fluid bed.

## DETAILED DESCRIPTION OF THE INVENTION

The present invention provides in a process of pyrohydrolysis of metal chlorides, wherein the pyrohydrolysis is performed under stoichiometric or oxidizing conditions, a method to control particle size of the fluid bed by the combination of recycle of cyclone fines and addition of a seed material comprised of inert solids wherein the addition rate of the seed material is based on particle size distributions of the bed material and of the seed material, and the metal oxide deposition rate, based on the metal chloride addition rate.

### Pyrohydrolysis Process

Pyrohydrolysis of metal chlorides is a well known process by which metal chlorides are thermally decomposed in the presence of water to form metal oxides and HCl. A good review of the process, history, and numerous parameters can be found in "Chloride Pyrohydrolysis". by E. M. L. Peek, Ph. D. Thesis, Technical University Delft, 1996, the teachings of which are incorporated herein by reference. This work frequently identifies particle size control in the fluid bed as one of the most important problems in the pyrohydrolysis process. The present invention provides a method for particle size control.

In the present invention, metal chlorides undergo pyrohydrolysis to form metal oxides and hydrogen chloride in a fluid bed reactor. The present invention is applicable to treating metal chlorides wherein the metal is selected from the group comprising iron, nickel, cobalt, manganese, chromium, silicon, titanium, magnesium, arsenic, antimony, or mixtures thereof. The metal chlorides can be a number of process-related streams, but in particular, the metal chlorides are byproduct streams such as those arising from pickling of steel, (i. e., pickle liquor) and manufacture of $TiO_2$ by the chloride process. The metal chlorides can be in solution, slurry or solid form. It may be advantageous to have the metal chlorides in solid form so as to increase capacity of the reactor at a constant velocity with only the water necessary for reaction to be added.

The metal chlorides may need to undergo some pretreatment prior to introduction into the reactor. In particular for the pyrohydrolysis of pickle liquor, this pretreatment may involve removal of some water so as to increase the metal concentration and reactor capacity. Other pretreatment methods may include filtration or other separation techniques.

The metal chlorides are introduced into the reactor through one or more feed lances. By feed lance it is meant to include any means to introduce metal chlorides into the reactor. The position of the feed lance is not critical to this invention. Any standard feed lance location such as at the bottom, top, or side (either above or below the surface of the bed), can be used.

The reactor is operated at a temperature of 600-1000°C. Temperature is maintained by combustion of a carbonaceous fuel with an oxygen-containing gas, typically air, both of which are fed to the bottom of the reactor. The carbonaceous fuel can be gaseous, e. g., natural gas; liquid, e. g., oil; or solid, e. g., coal. In this invention, the reactor is operated with at least a stoichiometric amount of oxygen present. Preferably the reactor is operated under oxidizing conditions with excess oxygen, more preferably with 5-10% excess oxygen.

When the metal chlorides are byproducts from a $TiO_2$ manufacturing process, they may advantageously comprise unreacted particulate coke from a chlorination process of titanium bearing materials. The presence of particulate coke in the metal chloride feed can provide a portion of the fuel required for maintaining temperature in the pyrohydrolysis process. For metal chlorides containing particulate coke, it is preferred to have the feed lance position in the bottom of the reactor so as to maximize consumption of the coke.

Upward movement of the combustion gases as well as other reactants and product provide fluidization means for the bed. Fluidization provides the means for mixing of the reactants such that thermal hydrolysis of the metal chlorides occurs to form metal oxides and hydrogen chloride.

## Bed Material

The fluid bed is comprised of particulate bed material which is typically comprised of metal oxide particles which may be the same metal oxides as the product metal oxides or other metal oxides which are inert under process conditions. The particulate bed material should have a particle size distribution such that the specific population is in the range of $7.60 \times 10^7$ to $1.77 \times 10^6$ particles per kilogram. This range of specific population corresponds to an average mean particle size of from about 200 to about 600 microns in a normal distribution and with a standard deviation of 40. At this particle size the bed operates efficiently in terms of providing sufficient surface area for product metal oxide to deposit thereupon.

The metal chlorides react in the bed to provide metal oxides and hydrogen chloride. The metal oxides predominantly deposit on the particulate bed material. There is within the bed means to remove particles such that the particles do not become too large so fluidization ceases. The means to remove particles can be through a bottom outlet or side overflow, etc., means known in the art.

The particle size distribution of the bed particles can be determined by any conventional method such as sieving the sample through a series of screens or by light scattering electronic devices that are well known in the art, preferably by sieving the sample through a series of screens and weighing the particles retained on each screen. It is convenient in the present invention to measure the particle size distribution of the bed particles prior to start-up of the process, calculating the specific population of particles larger than 50 microns and using specific population as the basis for particle size control in the process of this invention. Alternatively, the bed particle size distribution and specific population can be determined after start-up, so long as bed particle size distribution is within the range of a specific population of $7.60 \times 10^7$ to $1.77 \times 10^6$ particles per kilogram (200 to 600 microns).

## Cyclone Fines

A portion of the metal oxides produced do not deposit on the bed particles and are carried from the reactor with the exhaust gases. These are fine particles of metal oxides which leave the reactor with the exhaust gas and are collected downstream, typically in a cyclone, and are known as cyclone fines. In the present invention once the cyclone fines are collected, they are returned to the reactor directly from the cyclone, for example, by a cyclone downleg or a standpipe, to act as seed material on which newly formed metal oxide can deposit. The cyclone fines typically are comprised of metal oxide particles ranging in size from less than 25 microns to 300 microns in size. Preferably the cyclone efficiency is high, especially greater than 98% in returning exhausted fine particles to the bed.

## Seed Material

In the present invention in addition to the cyclone fines, a seed material is added to the reactor. This seed material is comprised of inert solids which are typically metal oxides that are the same metal oxides as the product or other metal oxides or materials which are inert under process conditions. Examples of metal oxides which can be added as a seed material include iron oxide (hematite and/or magnetite), silica, titanium dioxide, zircon sand, zirconia, silicates, mineral sands, alumina, slag materials from steel mills. and mixtures thereof. The seed material should have a specific population of not less than $1.40 \times 10^7$, or preferably range from $1.52 \times 10^9$ to $6.62 \times 10^7$ particles per kilogram. The particle size may range from less than 25 microns to 400 microns, with an average mean particle size of 50 to 300 microns, preferably 50 to 180 microns.

When the metal chlorides are from a byproduct stream from a chloride process for manufacture of $TiO_2$, the metal chlorides may themselves comprise inert solids due to ore blowover from the $TiO_2$ process which can act as seed material. Accordingly, the seed material will comprise titanium dioxide and silica.

The seed material can be added to the reactor through any of the feed lances available. Position of the feed lance is not critical and any conventional feed lance position can be utilized. The seed material can be added as a slurry wherein the inert solids are dispersed in a liquid, most typically water, or as a solid. Preferably the seed material is combined with the metal chlorides as a single stream.

The seed material is added to the reactor at a rate which is based on the specific population of the bed material, which can be determined prior to reactor start-up; metal oxide deposition rate, which is based on the metal chloride addition rate; and the specific population of the seed material. The metal chloride addition rate is based on reactor design and industry know-how. Specifically, the metal chloride addition rate is set by the effectiveness of the feed lances at dispersing the metal chloride into the hot reactor bed so as not to cause localized overcooling in the bed. The metal oxide deposition rate is determined from the metal chloride addition rate. This is done by calculating the amount of metal oxides generated using reaction stoichiometry. Each metal chloride is assumed to be fully converted to its most stable fully oxidized state.

The steady-state relationship is defined in equation 1 which serves as the basis for particle size control in the fluid bed reactor:

$$SR = DR \times \frac{BSP}{(SSP - BSP)} \qquad (1)$$

wherein SR = seed addition rate, typically measured in kg/hr; DR = metal oxide deposition rate, typically in kg/hr; BSP = specific population of the bed material, typically measured in particles/kg; and SSP = specific population of the seed material, typically measured in particles/kg, whereby the average particle size of the bed material is maintained in the range of about 200 to 600 microns, corresponding to specific populations of $7.6 \times 10^7$ to $1.77 \times 10^6$ particles per kilogram, respectively. Specific population is defined herein to mean the number of particles, bed particles or seed particles, greater than 50 microns in size, per kilogram of total bed or seed material. Alternatively, equation 1 can be written as equation 2 which provides a

$$\frac{SR}{DR} = \frac{BSP}{(SSP - BSP)} \qquad (2)$$

relationship between the ratio of seed addition rate to metal oxide deposition rate and the specific populations of the bed material and the seed material. The range of average particle size of the seed material and the ratio of seed rate to deposition rate are such that they maintain the bed material within the range of specific population of $7.60 \times 10^7$ to $1.77 \times 10^6$ particles per kilogram or an average mean particle size range of 200 to 600 microns during the transient period before steady-state is achieved.

## Description of Figure

Figure 1 is a graph of seed material particle size (in terms of specific population) versus seed to deposition ratio (the ratio of seed addition rate to metal oxide deposition rate, metal oxide deposition rate being based on metal chloride addition rate). Boundaries or limits define an operating area which permits control of particle size in the fluid bed. The operating area is defined by regions **1** and **2, 1** being preferred, **2** not being preferred, but acceptable within the parameters set for control of particle size. The regions outside of the operating areas **1** and **2** are those which present difficulties for controlling particle size in the fluid bed, or represent undesirably costly operating conditions.

Region **3** is defined by the lower limit of seed material particle size, an average particle size of the seed material of 50 microns with a standard deviation of 5, corresponding to a specific population of $1.52 \times 10^9$ particles per kilogram. (Note that the specific population is inversely related to particle size so that this is the upper limit of specific population of seed material.) In region **3,** the particles of seed material are too small to act effectively as seed. Such particles may become incorporated into the coating of growing bed particles. Small seed particle size leads to higher cyclone recycle rates due to high blowover.

Region **4** is defined by the lower limit of bed material particle size, average bed material particle size of 200 microns with a standard deviation of 40, corresponding to a specific population of $7.60 \times 10^7$ particles per kilogram. Below this particle size, in region **4** of the Figure, there will be high blowover of the bed particles which need to be recycled through the cyclone.

Region **5** is defined by the upper limit on seed to deposition ratio. This limit is set by process economics. The cost of the seed and the resulting product quality will dictate the allowable addition rate of seed. In region **5**, high seed to deposition ratio results in high operating costs. This ratio is typically less than or equal to 0.3, or otherwise stated, the seed addition rate is not greater than 30% of the rate at which the metal oxides deposit on the bed particles. Higher seed rates also impose a higher heat load on the system.

Region **6** is defined by the upper limits of seed material particle size and bed material particle size. The upper limits of seed and bed particle sizes are set by the desired transient and steady-state bed particle sizes which prevent dust formation (red dust when the metal is iron). For the seed particle size, this limit is 300 microns with a standard deviation of 5 which corresponds to a specific population of $1.40 \times 10^7$ particles per kilogram. For the bed particle size the upper limit is 600 microns with a standard deviation of 40, corresponding to a specific population of $1.77 \times 10^6$ particles per kilogram. The steady-state relationship of equation 1 or 2 requires that the seed size must be less than the bed size to obtain a valid solution. In region **6,** bed particle size is too large to provide sufficient surface area for deposit thereon of product metal oxide.

## Control Strategies

The steady-state relationship for addition of seed material is defined in equation 1, above. From this equation. with the deposition rate of metal oxides (based on metal chloride addition rate) and the specific populations of the bed material and of the seed material being known, one can calculate the rate at which seed particles should be added to control particle size of the bed.

Specific population is defined herein to be the calculated number of particles per kilogram of a given particle size distribution assuming that only particles larger than 50 microns are counted. (Particles less than about 50 microns are not likely to be effective in seeding.) Specific population can be related to particle size by use of a "normal distribution". Normal distribution is defined herein as a distribution of weights evenly distributed about a mean size. The breadth of the normal distribution is determined by standard deviation. For use in this invention, the standard deviation for bed distribution is 40 microns and the standard deviation for the seed distribution is 5 microns.

Specific Population is calculated by the following procedure.

1) Obtain a representative sample of the solid of interest, for example, the bed material or the seed material.
2) Weigh the solid sample.
3) If not known, measure the particle density of the sample. The particle density is the density of an individual particle. (In pyrohydrolysis. the particle density is usually well known.)
4) Measure the particle size distribution of the sample. This can be done by any of a number of methods, the most common of which is to use a series of screens. The result of this measurement is a listing of mass fractions of particles, $x_i$, as a function of particle size, $DP_i$.
5) Calculate the specific population (SP) of the sample in the following manner.

$$SP \;=\; \sum_{i > 50} \frac{6x_i}{\pi DP_i^3 \rho_i} \qquad\qquad (3)$$

where

$x_i$ = mass fraction of solids in size i
$\pi$ = 3.1415
$DP_i$ = particle size of solids in size i [meters]
$\rho_i$ = density of particles in size i [kg/m$^3$]
$\Sigma$ = summation of particles larger than 50 microns (i > 50)

Equation 3 applies to spherical particles (volume of a sphere = $\pi D^3/6$, D = diameter of the sphere). If the particles are angular, a shape factor can be added to the denominator. Typically in pyrohydrolysis, the particles are round and have very low porosity. The standard equation above is generally sufficient without any modifications.

## Process to Maintain Constant Particle Size of Bed

1) Withdraw a solid representative sample from the fluid bed reactor. Calculate the specific population of the bed material in the manner shown above.
2) Obtain a representative sample of the seed material. Calculate the specific population of the seed material in the manner shown above.
3) Obtain the addition rate of metal chlorides and the composition of the metal chlorides.
4) Calculate the mass of metal oxides that will be produced from the addition rate of metal chlorides by assuming oxidation of these metal chlorides to their highest oxidation state. This is metal oxide deposition rate.
5) Solve equation 1 to determine the rate at which seed particles should be added.

**Process to Increase Particle Size of Bed**

1) Select a target size particle size distribution of the bed material. In this case it will be larger than the current size contained in the bed. Calculate the specific population associated with the new target size distribution. Alternatively, the target specific population of the bed material can be selected from the desired operating region shown in Figure 1.
2) Obtain a representative sample of the seed material. Calculate the specific population of the seed material in the manner shown above. (Note that a bed sample is not needed in this case.)
3) Obtain the addition rate of metal chlorides and the composition of the metal chlorides.
4) Calculate the mass of metal oxides that will be produced from the addition rate of metal chlorides by assuming oxidation of these metal chlorides to their highest oxidation state. This is metal oxide deposition rate.
5) Solve equation 1 using the target bed material specific population and the seed material specific population, solving for the rate at which seed particles should be added.

**Process to Decrease Particle Size of Bed**

1) Select a target size particle size distribution of the bed material. In this case it will be smaller than the current size contained in the bed. Calculate the specific population associated with the new target size distribution. Alternatively, the target specific population of the bed can be selected from the desired operating region shown in Figure 1.
2) Obtain a representative sample of the seed material. Calculate the specific population of the seed material in the manner shown above. (Note that a bed sample is not needed in this case.)
3) Obtain the addition rate of metal chlorides and the composition of the metal chlorides.
4) Calculate the mass of metal oxides that will be produced from the addition rate of metal chlorides by assuming oxidation of these metal chlorides to their highest oxidation state. This is metal oxide deposition rate.
5) Solve equation 1 using the target bed material specific population and the seed material specific population, solving for the rate at which seed particles should be added.

**Process to Correct an Over-Seeded Bed**

An over-seeded bed is characterized by bed particle size that is decreasing over time and may be characterized by high blowover rates of fine material into the cyclone.

1) Select a target size particle size distribution of the bed material. In this case it will be larger than the current size contained in the bed. Calculate the specific population associated with the new target size distribution. Alternatively, the target specific population of the bed can be selected from the desired operating region shown in Figure 1.
2) Obtain a representative sample of the seed material. Calculate the specific population of the seed material in the manner shown above.
3) Obtain the addition rate of metal chlorides and the composition of the metal chlorides.
4) Calculate the mass of metal oxides that will be produced from the addition rate of metal chlorides by assuming oxidation of these metal chlorides to their highest oxidation state. This is metal oxide deposition rate.
5) Solve equation 1 using the target bed material specific population and the seed material specific population, solving for the rate at which seed particles should be added. Decrease the rate of seed addition to the desired value. An alternative to decreasing the seed addition rate is to increase the rate of metal chlorides being fed to the bed to the point where Equation 1 is satisfied for the desired bed material specific population.

**Process to Correct an Under-Seeded Bed**

An under-seeded bed is characterized by bed particle size that is significantly increasing over time.

1) Select a target size particle size distribution of the bed material. In this case it will be typically be smaller than the current size contained in the bed. Calculate the specific population associated with the new target size distribution of the bed material. Alternatively, the target specific population of the bed material can be selected from the desired operating region shown in Figure 1.

2) Obtain a representative sample of the seed material. Calculate the specific population of the seed material in the manner shown above.

3) Obtain the addition rate of metal chlorides and the composition of the metal chlorides.

4) Calculate the mass of metal oxides that will be produced from the addition rate of metal chlorides by assuming oxidation of these metal chlorides to their highest oxidation state. This is metal oxide deposition rate.

5) Solve equation 1 using the target bed material specific population and the seed material specific population, solving for the rate at which seed particles should be added. Increase the rate of seed addition to the desired value. An alternative to increasing the seed addition rate is to decrease the rate of metal chlorides being fed to the bed to the point where Equation 1 is satisfied for the desired bed material specific population.

## COMPARATIVE EXAMPLE A

A fluid bed reaction vessel was charged with a bed material having a particle size distribution as shown in the Table below. Using equation 3, the specific population of this starting bed material was calculated to be $6.82 \times 10^7$ particles per kilogram. The particle size distribution of the seed material is also included in the Table. The specific population of the seed material was calculated using equation 3 to be $9.76 \times 10^8$ particles per kilogram. The particle densities of the bed material and the seed material were both 5200 kg/m$^3$. The metal oxide deposition rate was determined to be 430 kg/hr, based on a metal chloride feed of known composition comprising ferrous chloride. The addition rate of the seed material was 0.5 kg/hr.

TABLE

| Particle Size (microns) | Bed Material Mass Fraction (Weight %) | Seed Material Mass Fraction (Weight %) |
|---|---|---|
| 27 | 0.00 | 0.0 |
| 38 | 0.00 | 3.0 |
| 53 | 0.30 | 17.0 |
| 75 | 1.58 | 56.0 |
| 106 | 5.26 | 22.0 |
| 150 | 15.53 | 1.0 |
| 212 | 22.18 | 1.0 |
| 300 | 33.27 | 0.0 |
| 420 | 15.27 | 0.0 |
| 595 | 5.59 | 0.0 |
| 841 | 1.02 | 0.0 |
| 1200 | 0.00 | 0.0 |
| 2000 | 0.00 | 0.0 |

It was found that at this addition rate, the bed continued to grow and eventually produced a "red dust" event. Subsequent to the red dust event, using equation 1, it was determined that this addition rate of seed material was too low so the system moved toward operation outside of the operating window illustrated in Figure 1. Equation 1 was then used to calculate the addition rate of seed material to maintain the bed at the specific population of the starting bed material. This rate was approximately 32.3 kg/hr.

## EXAMPLE

The process of Comparative Example A was repeated using the same seed material ($9.76 \times 10^8$ particles per kilogram), starting bed material and metal oxide deposition rate as above. The seed addition rate was selected to be 7.3 kg/hr using equation 1, to allow for a slight increase in the particle size distribution of the bed material while still keeping within the operating window of Figure 1. This seed material addition rate resulted in a specific population of $1.63 \times 10^7$ particles/kg for the bed material at steady state. This specific population corresponded to a normal distribution of particles around a mean of 300 microns with a standard deviation of 40.

**Claims**

1. A process for pyrohydrolysis of metal chlorides in a fluid bed reactor comprising particulate bed material, to form hydrogen chloride (HCl), metal oxides which deposit on the bed material, and fine particulate metal oxides which are exhausted from the reactor, wherein the fine particulate metal oxides are collected and recycled to the reactor, **charactezised by** the steps of:

   (a) selecting a target specific population of the bed material, wherein the target specific population is within the range of $7.60 \times 10^7$ to $1.77 \times 10^6$ particles per kilogram;
   (b) selecting a metal chloride addition rate to the reactor;
   (c) determining rate at which the metal oxides deposit on the bed material, based on the metal chloride addition rate; and
   (d) adding a seed material to the bed wherein the seed material has a specific population of not less than $1.40 \times 10^7$ particles per kilogram, and wherein the seed addition rate is defined by

$$SR = DR \times \frac{BSP}{(SSP - BSP)}$$

   wherein SR = seed addition rate, DR = metal oxide deposition rate, BSP = specific population of the greater than 50 micron bed material, and SSP = specific population of the greater than 50 micron seed material, whereby the specific population of the bed is controlled within the range of about $7.60 \times 10^7$ to about $1.77 \times 10^6$.

2. The process of claim 1 wherein an added step comprises determining the current specific population of the bed material, and wherein the target specific population is less than the current specific population such that the particle size of the bed material is increased.

3. The process of claim 1 wherein an added step comprises determining the current specific population of the bed material, and wherein the target specific population is greater than the current specific population such that the particle size of the bed material is decreased.

4. The process of claim 1 wherein the process is used to correct an over-seeded bed wherein the particle size of the bed material is decreasing over time.

5. The process of claim 1 wherein the process is used to correct an under-seeded bed wherein the particle size of the bed material is increasing over time.

6. The process of claims 1-5 wherein the average particle size of the seed material is 50 to 300 microns.

7. The process of claim 6 wherein the average particle size of the seed material is 50 to 180 microns.

8. The process of claims 1-7 wherein the metal chlorides comprise pickle liquor.

9. The process of claims 1-7 wherein the metal chlorides comprise byproducts from a process to chlorinate titanium bearing materials.

10. The process of claim 9 wherein the metal chlorides comprise particulate coke.

11. The process of claims 1-7 wherein the seed material comprises iron oxide, silica, titanium dioxide, zircon sand, zirconia, silicates, mineral sands, alumina, slag materials from steel mills, and mixtures thereof.

12. The process of claim 9 or 10 wherein the metal chlorides comprise inert solids and wherein the inert solids act as seed material.

**Patentansprüche**

1. Verfahren zur Pyrohydrolyse von Metallchloriden in einem Fließbettreaktor mit teilchenförmigem Bettmaterial zur Bildung von Chlorwasserstoff (HCl), Metalloxiden, die sich auf dem Bettmaterial ablagern, und feindispersen Metalloxiden, die aus dem Reaktor abgesaugt werden, wobei die feindispersen Metalloxide aufgefangen und dem Reaktor wieder zugeführt werden, **gekennzeichnet durch** die folgenden Schritte:

(a) Auswählen einer zielspezifischen Population des Bettmaterials, wobei die zielspezifische Population innerhalb des Bereichs von $7,60 \times 10^7$ bis $1,77 \times 10^6$ Teilchen pro Kilogramm liegt;

(b) Auswahl einer Metallchlorid-Zugabegeschwindigkeit für den Reaktor;

(c) Bestimmen der Ablagerungsgeschwindigkeit der Metalloxide auf dem Bettmaterial auf der Basis der Metallchlorid-Zugabegeschwindigkeit; und

(d) Zugabe eines Saatmaterials zum Bett, wobei das Saatmaterial eine spezifische Population von nicht weniger als $1,40 \times 10^7$ Teilchen pro Kilogramm aufweist, und wobei die Saatzugabegeschwindigkeit **durch** die folgende Beziehung definiert ist:

$$SR = DR \times \frac{BSP}{(SSP - BSP)}$$

mit SR = Saatzugabegeschwindigkeit, DR = Metalloxidablagerungsgeschwindigkeit, BSP = spezifische Population des Bettmaterials von mehr als 50 $\mu$m Korngröße, und SSP = spezifische Population des Saatmaterials von mehr als 50 $\mu$m Korngröße,

wodurch die spezifische Population des Betts innerhalb des Bereichs von etwa $7,60 \times 10^7$ bis etwa $1,77 \times 10^6$ gesteuert wird.

2. Verfahren nach Anspruch 1, wobei ein zusätzlicher Schritt die Bestimmung der aktuellen spezifischen Population des Bettmaterials aufweist, und wobei die zielspezifische Population kleiner ist als die aktuelle spezifische Population, so daß die Teilchengröße des Bettmaterials vergrößert wird.

3. Verfahren nach Anspruch 1, wobei ein zusätzlicher Schritt die Bestimmung der aktuellen spezifischen Population des Bettmaterials aufweist, und wobei die zielspezifische Population größer ist als die aktuelle spezifische Population, so daß die Teilchengröße des Bettmaterials verringert wird.

4. Verfahren nach Anspruch 1, wobei das Verfahren zur Korrektur eines Betts mit zu viel Saatmaterial angewandt wird, wobei die Teilchengröße des Bettmaterials mit der Zeit abnimmt.

5. Verfahren nach Anspruch 1, wobei das Verfahren zur Korrektur eines Betts mit zu wenig Saatmaterial angewandt wird, wobei die Teilchengröße des Bettmaterials mit der Zeit zunimmt.

6. Verfahren nach einem der Ansprüche 1 bis 5, wobei die mittlere Teilchengröße des Saatmaterials 50 bis 300 $\mu$m beträgt.

7. Verfahren nach Anspruch 6, wobei die mittlere Teilchengröße des Saatmaterials 50 bis 180 $\mu$m beträgt.

8. Verfahren nach einem der Ansprüche 1 bis 7, wobei die Metallchloride Beizlösung aufweisen.

9. Verfahren nach einem der Ansprüche 1 bis 7, wobei die Metallchloride Nebenprodukte aus einem Verfahren zum Chlorieren von titanhaltigen Materialien aufweisen.

10. Verfahren nach Anspruch 9, wobei die Metallchloride teilchenförmigen Koks aurweisen.

11. Verfahren nach einem der Ansprüche 1 bis 7, wobei das Saatmaterial Eisenoxid, Siliciumdioxid, Titandioxid, Zirkonsand, Zirkoniumdioxid, Silicate, Mineralsande, Aluminiumoxid, Schlacke aus Stahlwerken und Gemische daraus aufweist.

12. Verfahren nach Anspruch 9 oder 10, wobei die Metallchloride inerte Feststoffe aufweisen, und wobei die inerten Feststoffe als Saatmaterial wirken.

**Revendications**

1. Procédé de pyrohydrolyse de chlorures métalliques dans un réacteur à lit fluidisé, comprenant un matériau de lit particulaire, pour produire du chlorure d'hydrogène (HCl), des oxydes métalliques se déposant sur le matériau du lit, et des oxydes métalliques sous forme de particules fines évacuées du réacteur, les oxydes métalliques sous forme de particules fines étant collectés et recyclés vers le réacteur, **caractérisé par** les étapes ci-dessous:

(a) sélection d'une population cible spécifique du matériau du lit, la population cible spécifique étant comprise dans l'intervalle allant de $7{,}60 \times 10^7$ à $1{,}77 \times 10^6$ particules par kilogramme;
(b) sélection d'un taux d'addition de chlorure métallique dans le réacteur;
(c) détermination du taux de dépôt des oxydes métalliques sur le matériau du lit sur la base du taux d'addition du chlorure métallique; et
(d) addition d'un matériau de germes au lit, le matériau de germes ayant une population spécifique non inférieurè à $1{,}40 \times 10^7$ particules par kilogramme, le taux d'addition du matériau de germes étant défini par

$$SR = DR \times \frac{BSP}{(SSP - BSP)}$$

où SR = taux d'addition du germe, DR = taux de dépôt de l'oxyde métallique, BSP = population spécifique de matériau du lit d'une dimension supérieure à 50 µm, et SSP = population spécifique de matériau de germes d'une dimension supérieur à 50 µm

la population spécifique du lit étant ainsi contrôlée dans le cadre d'un intervalle allant d'environ $7{,}60 \times 10^7$ à environ $1{,}77 \times 10^6$.

2. Procédé selon la revendication 1, dans lequel une étape additionnelle comprend la détermination de la population spécifique actuelle du matériau du lit, la population cible spécifique étant inférieure à la population spécifique actuelle, de sorte que la dimension des particules du matériau du lit est accrue.

3. Procédé selon la revendication 1, dans lequel une étape additionnelle comprend la détermination de la population spécifique actuelle du matériau du lit, la population cible spécifique étant supérieure à la population spécifique actuelle, de sorte que la dimensions des particules du matériau du lit est réduite.

4. Procédé selon la revendication 1, le procédé étant appliqué pour corriger un lit à ensemencement excédentaire, la dimension des particules du matériau du lit étant réduite dans le temps.

5. Procédé selon la revendication 1, le procédé étant appliqué pour corriger un lit à ensemencement insuffisant, la dimension des particules du matériau du lit étant accrue dans le temps.

6. Procédé selon les revendications 1 à 5, dans lequel la dimension moyenne des particules du matériau de germes est comprise entre 50 et 300 µm.

7. Procédé selon la revendication 6, dans lequel la dimension moyenne des particules du matériau de germes est comprise entre 50 et 180 µm.

8. Procédé selon les revendications 1 à 7, dans lequel les chlorures métalliques comprennent une solution de décapage.

9. Procédé selon les revendications 1 à 7, dans lequel les chlorures métalliques comprennent des sous-produits d'un procédé pour chlorer des matériaux à base de titane.

10. Procédé selon la revendication 9, dans lequel les chlorures métalliques comprennent du coke particulaire.

11. Procédé selon les revendications 1 à 7, dans lequel le matériau de germes comprend de l'oxyde de fer, de la silice, du dioxyde de titane, du sable de zirconium, de la zircone, des silicates, des sables minéraux, de l'alumine, des scories d'aciéries et des mélanges correspondants.

12. Procédé selon les revendications 9 ou 10, dans lequel les chlorures métalliques comprennent des solides inertes, les solides inertes faisant fonction de matériau de germes.

FIG.1